# EUROPEAN PATENT SPECIFICATION

(11) **EP 0 219 904 B1**
(45) Date of publication and mention of the grant of the patent: **05.04.1995**
(21) Application number: 86201748.0
(22) Date of filing: 09.10.1986
(51) Int. Cl.: A01D 34/66, A01D 34/73

(54) **An arrangement for and a method of mowing standing crops**
Einrichtung und Verfahren zum Mähen von Getreide
Dispositif et procédé de fauchage de végétaux

(30) Priority: 14.10.1985 NL 8502803
(43) Date of publication of application: 29.04.1987
(73) Proprietor: C. van der Lely N.V., NL-3155 PD Maasland (NL)
(72) Inventor: Van der Lely, Ary, Maasland (NL); Bom, Cornelis Johannes Gerardus, Rozenburg (NL)
(74) Representative: Mulder, Herman

(56) References cited:
- FR-A- 2 248 771
- FR-A- 2 557 418
- FR-A- 2 561 488
- GB-A- 2 126 067
- NL-B- 133 109

## Description

The invention relates to an arrangement for mowing standing crops, comprising at least one mowing structure which is rotatable around an upwardly extending axis of rotation, which structure includes a disc-shaped carrier near whose periphery at least one mowing member is provided by means of a fastening member extending through the carrier and a supporting member, which is fastened to the bottom side of the carrier and to which the mowing member is fitted capable of rotation, the fastening member including a bolt head or nut situated at the upper side of the carrier and in the region of which the carrier is provided with flanged edges which extend around at least part of the bolt head or nut, a further fastening member with a bolt head or nut above the carrier fastening the supporting member to the bottom side of the carrier.

Arrangements of this type are known from GB-A-2 152 347. An object of the invention is to obtain a useful and simple construction of the mowing structure. According to the invention this can be obtained when a retaining strip is mounted to and resting against the upper side of the carrier, the fastening member and the further fastening member extend through apertures in the retaining strip and bolt heads or nuts being provided above the retaining strip so as to lock the retaining strip from movement relative to the carrier and around the fastening member and the further fastening member, said carrier being made of hardened material and said retaining strip being made of a material softer than that of the hardened carrier.

With regard to the securing of the mowing member to the carrier, the retaining strip, being locked relative to the carrier by the fastening member and the further fastening member, acts as a locally softer part of the hardened carrier. It is in this way possible for bolt heads, nuts or locker rings to have grip on the retaining strip and therewith relative to the carrier. Owing here to the chance of loosening of the mowing member from the carrier, as a possible consequence of vibrations and impacts, can practically be prevented. The hardening of the carrier has a positive effect on strength of the carrier and on the resistance to deformation. Owing hereto the thickness of the carrier and therewith its weight may be reduced. In addition, also the wear resistance of the carrier is increased by the hardening process. The part of the hardened disc-shaped carrier to which the mowing blade is fastened is strengthened as being clamped between the retaining strip and the supporting member by the fastening member and the further fastening member. Owing hereto it will be prevented that impact-loads caused by impact of the mowing blade against hard objects, e.g. stones, on the ground will damage the hardened disc-shaped carrier.

The invention renders it possible to construct a carrier with a thickness of at least 2 mm, but not necessarily more than 4 mm. An advantageous construction is obtained when the carrier is about 3 mm. This measure is convenient for the shaping of the discs during manufacturing, whilst at the same time a low weight of the carrier is obtained.

A favourable construction is obtained when at least one flanged edge extends along the retaining strip. An advantageous connection of the mowing structure to the arrangement is realized when one or more edges are contiguous to a conical centre portion of the carrier. A pressure member is mounted between the centre portion and a supporting shaft to which the mowing structure is connected and which is capable of rotation around the upstanding axis of rotation. This connection of the mowing structure to the carrier shaft can be further improved in an advantageous manner by disposing a spring member below the pressure member. The spring member may be an O-ring giving a fixed settlement between the pressure member and the supporting shaft.

For a better understanding of the invention and to show how it may be carried into effect, reference will now be made to the accompanying drawings of an advantageous embodiment of the arrangement of the invention.

Figure 1 is a plan view of an arrangement for mowing standing crops.

Figure 2 shows, on an enlarged scale, a plan view of a portion of the arrangement of Figure 1.

Figure 3 is a view taken in the direction of the arrow III in Figure 2 and a partly vertical cross-section through a mowing structure.

Figure 4 is a plan view of a carrier of a mowing structure of the arrangement shown in Figures 1 - 3.

Figure 5 is a view of the mowing structure of Figure 4 taken in the direction of the arrow V in Figure 4.

Figure 6 is a plan view of a different embodiment of a carrier for a mowing structure.

Figure 7 is a view of the carrier of Figure 6, taken in the direction of the arrow VII in Figure 6.

Figure 8 is a cross-sectional view through a different embodiment of the connection of a mowing structure to a rotary shaft of an arrangement for mowing crops.

Figure 9 is a vertical cross-section through a still further embodiment of the connection of a mowing structure to a rotary shaft of an arrangement according to the invention.

The mowing arrangement shown in the Figures comprises a mowing bar 1 to which four mowing structures 2, 3, 4 and 5 are fastened. In a manner not further shown, the mowing bar 1 is pivotally connected to a carrier arm 6, which is coupled to a fastening trestle 7. The fastening trestle 7 includes coupling members 8 and a coupling member 9 by means of which the fastening trestle can be coupled to the lifting arms and to the upper top rod, respectively of a lifting arrangement of a tractor or a suchlike vehicle.

The mowing bar 1 is made up of a sequence of separate parts comprising separate driving units 12 and intermediate pieces 13. The driving units 12 and the intermediate pieces 13 are connected to each other by a tie rod 14. The tie rod 14 extends through all of the intermediate pieces 13 and driving units 12. The tie rod 14 is heavily loaded in tension, so that all driving units 12 and intermediate pieces 13 are subjected to a compressive force to connect the same together to make up the mowing bar 1.

The arrangement includes transmission members, not further shown, comprising a coupling shaft 10 which is couplable by means of an intermediate shaft to the power take-off shaft of a tractor or a suchlike vehicle. The mowing structures 2, 3, 4 and 5 are coupled to transmission members provided in the driving units 12. The transmission members in the driving units 12 are intercoupled by a main driving shaft 40 extending longitudinally to the mowing bar 1 through the driving units 12 and the intermediate pieces 13 in a manner not further shown. The driving shaft 40 is coupled via transmission members, not shown, with the coupling shaft 10, so that during operation the mowing members are capable of rotation around upwardly extending rotary axes 11.

In principle, the mowing structures 2 to 5 are of identical construction, which will be further illustrated on the basis of and with reference to mowing structure 5. The mowing structure 5 has a carrier 15 which, in a plan view, is in the form of an oval disc. The disc-shaped carrier 15 has a conical central portion 16 whose outer circumference, in plan view, is round and passes via folding lines 17 into a, basically flat, peripheral portion 18 which extends perpendicularly to the rotary axis 11. The mowing structure 5 comprises two diametrically opposite mowing members 19 and 20. The mowing members 19 and 20 are constituted in this embodiment by mowing knives and are both connected in a similar way to the carrier 15, for which reason only the connection of the mowing knife 20 is shown in detail.

The mowing member 20 is fastened to the bottom side of a supporting member 21. The supporting member 21 is bolted to the bottom side of the peripheral portion 18 of the carrier 15 by means of a bolt 22 and a threaded bolt 29, the arrangement being such as is illustrated more specifically in Figure 3. The bolt 22 has a bolt head 23, the mowing knife 20 being rotatable around the bolt 22 between the head 23 and the supporting member 21. The supporting member 21 has a stop 25 which, taken in a direction of a plane perpendicular to the centre line of the bolt 22, is flush with the mowing member 20. The centre line then constitutes a pivotal shaft for the mowing knife 20 arranged rotatably around the bolt 22. The supporting member 21 has a portion 26 in the form of a strip, the stop 25 extending downwardly from this strip-shaped portion. In the region of the stop 25 the supporting member 21 has a boss 27 which extends into the extension of the stop 25 and extends over the strip-shaped portion 26. The boss 27 is positioned in an aperture 28 in the carrier 15. The threaded bolt 29 also extends through the aperture 28 and reaches into a threaded hole, not shown, in the boss 27 and the stop 25. The head of the threaded bolt 29 is located above the carrier 15, as is also the nut 24 of the bolt 22. The threaded bolt 29 and the bolt 22 extend through apertures in a retaining strip 30 disposed on the upper side of the carrier 15 and extending under the nut 24 and the head of the threaded bolt 29. The nut 24 is a self-locking nut and a spring ring 31 is positioned under the head of the threaded bolt 29.

In the region of the fastening members constituted by the bolts 22 and 29, the peripheral portion 18 is provided with upwardly extending edges 32 and 33 which are formed by outwardly folded portions of the peripheral portion 18. The edges 32 and 33 extend, in plan view (Figure 4), to both sides of the nut 24 and of the head of the bolt 29. The edges 32 and 33 have facing sides 34 and 35 which extend at wide angles relative to the flat portion 18 (Figure 5). The sides 36 and 37, which face away from each other, of the edges 32 and 33 are in a considerably flatter position relative to the portion 18. The edges 32 and 33 extend from the periphery of the disc-shaped carrier 15 in an approximately radial direction to the conical portion 16. The edges 32 and 33 are approximately parallel to each other and are slightly bent outwards in the region of the nut 24 around the hole through which the bolt 22 has been inserted. In this situation, flanges 38 and 39 are formed around the nut 24. The edges 32 and 33 are at least substantially of the same height as the nut 24 and the head of the threaded bolt 29, respectively.

Turned relative to the mowing members 19 and 20, the carrier 15 is provided in the peripheral portion 18 with upwardly directed, flanged portions 41 and 42. These flanged portions 41 and 42 form so to speak raised peripheral portions 18, the flanging portions 41 and 42 forming recesses at the bottom side of the carrier 15, taken in the direction of the bottom side 43 of the carrier 15. These flanged portions 41 and 42 are diametrically opposite to each other and half-way between the mowing members.

The central section 45 of a carrier is parallel to the bottom side 43 and has an angular, in this embodiment a square, aperture 46. The aperture 46 is provided around a boss 47 of a supporting shaft 48, not shown, carrying the mowing structure 5. In a manner not further shown, the supporting shaft 48 is bearing-supported in the mowing bar 1 and is connected to the drive members which are contiguous to the coupling shaft 10. The central section 45 bears on a supporting edge 49 of the supporting shaft 48. The central section 45 and consequently the carrier 15 are pressed down by a pressure member 50. The pressure member 50 is positioned around a bolt 51 which is connected to the supporting shaft 48, and is connected to the supporting shaft 48 by means of a nut 44.

The mowing structures 2, 3 and 4 are connected to a supporting shaft via the respective carriers 15 in a similar way as described in the foregoing for the mowing structure 5. The carrier members 15 are so rigid that they have a fairly high resistance against damage. For that purpose they have a thickness 54 of approximately 3 mm, but preferably not exceeding 4 mm. The disc-shaped supporting members are preferably made of metal and, in accordance with the invention, preferably of hardened metal. The carrier members are in one piece and punched, for example, from one single piece of material.

Figure 3 shows the mowing structure 5 which constitutes the outermost mowing structure of a row of mowing structures 2 to 5 fastened to the mowing bar 1. The mowing structure 5 is disposed on that end of the mowing bar 1 which is remote from the fastening trestle 7 by means of which the mowing arrangement can be coupled to the tractor or a suchlike vehicle. A conveyor member, for example the conveyor member 56, is preferably connected to such an outermost mowing structure In this embodiment the conveyor member 56 is in the form of a conical member which at the same time constitutes a cover member for the fastening means constituted by the pressure member 50 and the nut 44 for connecting the mowing member to the supporting shaft 48. The conveyor or cover member is bolted to the carrier 15 by means of the threaded bolts 29. In this situation, these threaded bolts are inserted through holes in lugs 57 which are fastened diametrically opposite to each other to the cover member 56. The cover member 56 further bears against the pressure member 50 via a disc 58 which is disposed at the interior side of the cover member 56, the interior side of this disc bearing on an upper edge 59 of the pressure member 50.

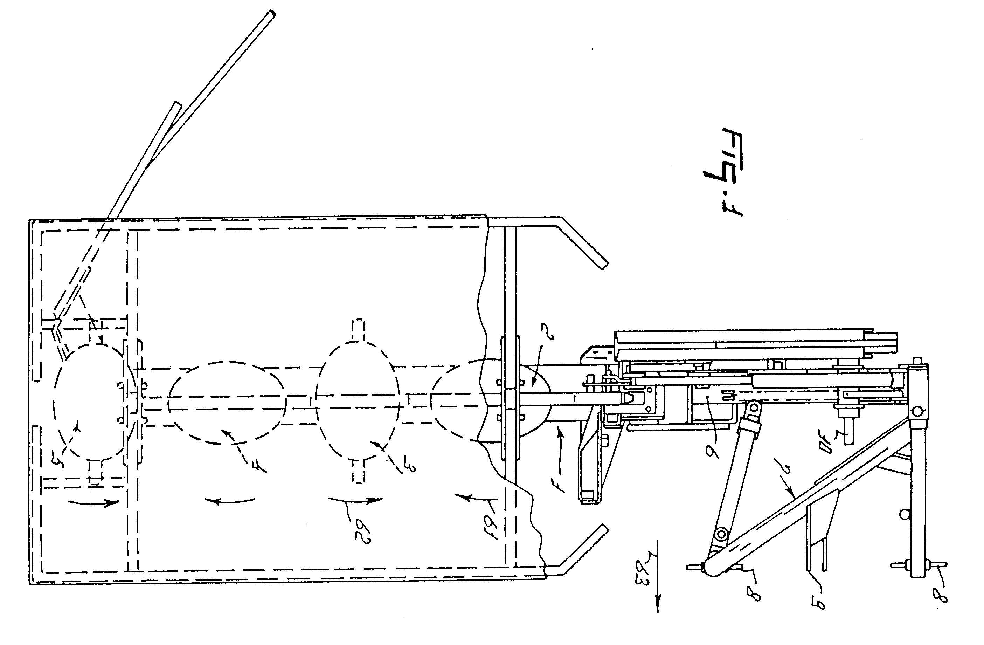

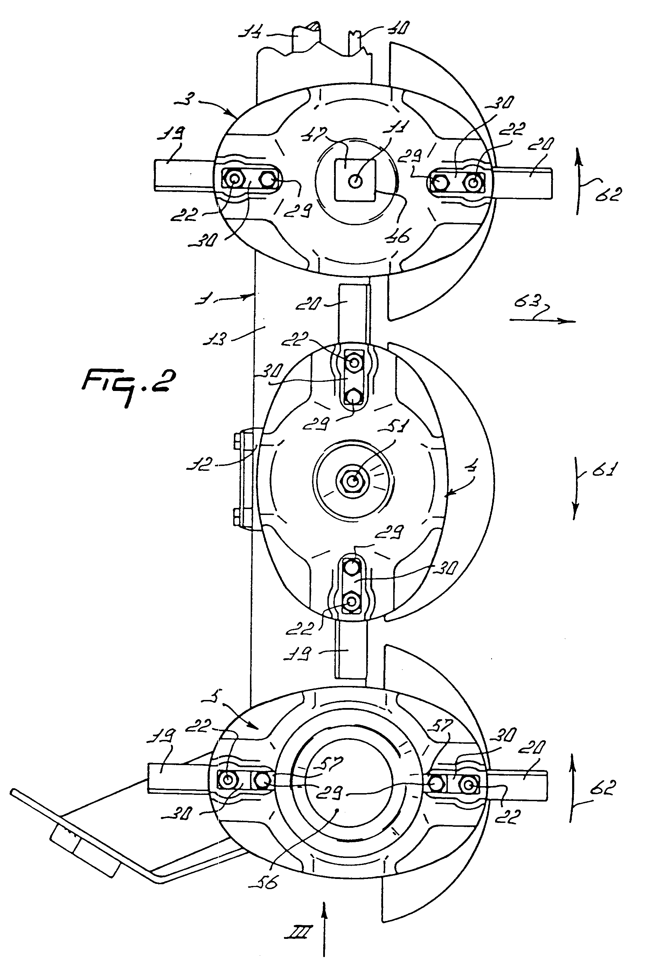

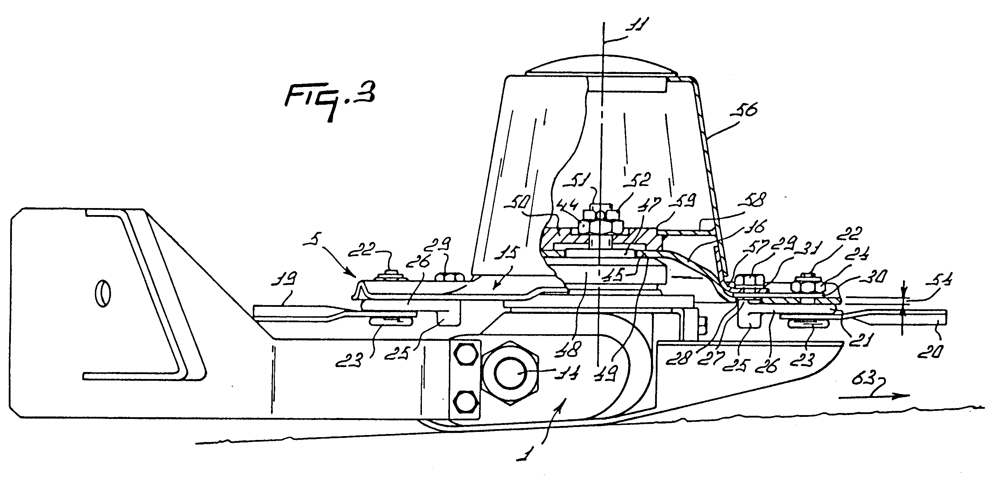

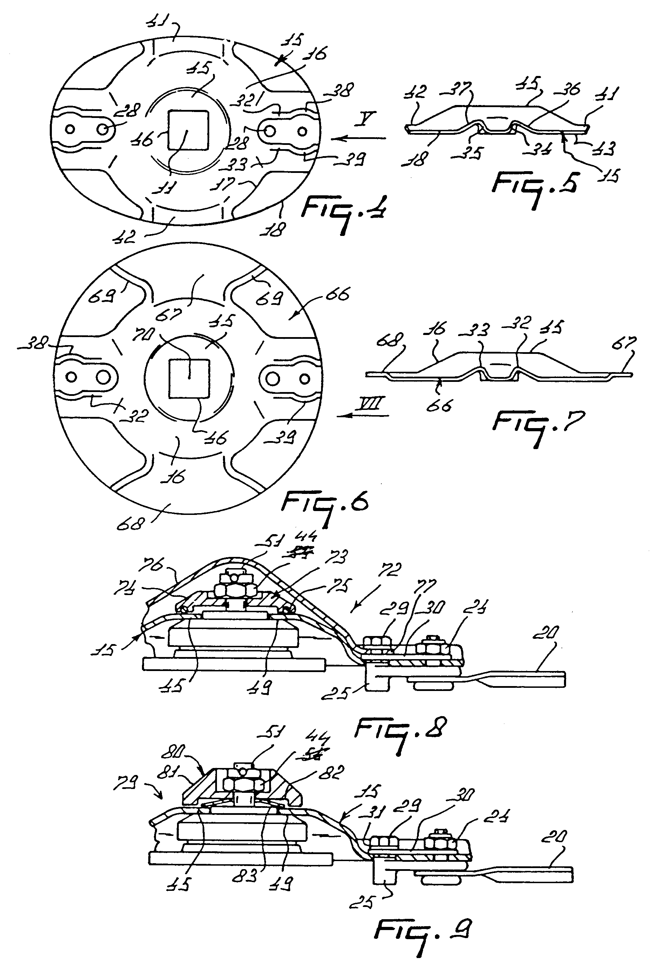

For use, the arrangement is coupled to a tractor or a suchlike vehicle to be moved over the land to be mown. To that end, the coupling members 8 and 9 can be coupled to the lifting arrangement of the tractor. The coupling shaft 10 is coupled to the power take-off shaft of the tractor by means of an intermediate shaft. From the power take-off shaft of the tractor the mowing structures can be caused to rotate via the coupling shaft 10 and the transmission members, not shown, present in the arrangement, in the desired directions of rotation, for example the directions denoted by the arrows 61 and 62 in Figures 1 and 2. During travel of the arrangement in the direction indicated by the arrow 63, the crop with which the mowing structures come into contact is cut by the mowing members 19 and 20 rotating around the rotary axes. During this travel, the cut crop is seized by the mowing structures and, partly as a result of the rotation thereof, is conveyed to behind the mowing bar 1. The carrier members 15 of the mowing members will catch the crop at least partly, and convey same. In this situation the mowing structures tend to convey the crop to the rear in those places where they move rearwards. Particularly with large quantities of crop, a large portion thereof will move to the rear over and beyond the mowing structures because of the travel of the arrangement. Because of this crop-gripping action by the mowing structures and moving of the crop over and beyond the mowing structures, the several portions which come into contact with the crop are subjected to wear. To prevent more specifically wear of the fastening members 22 and 29, these members have their upper ends located between the edges 32 and 33. Thus, the edges 32 and 33 constitute edges to protect the fastening members 22 and 29 from damage and from wear.

It is particularly advantageous for the carrier members to be made of hardened metal. This reduces wear of the carrier members. Furthermore this may render the upper surface plane of the carrier to be more appropriate for conveying the crop across and/or through the carriers. To form an adequate protection for the fastening members 22 and 29, the edges 32 and 33 fit as tightly as possible around the nut 24 and the head of the threaded bolt 29. For that purpose the sides 34 and 35 of the upwardly flanged edges 32 and 33, are positioned almost vertically or at a large angle relative to the bottom side 43. The sides are in a flatter position than the sides 34 and 35 to provide that the crop will not adhere to the edges 32 and 33. The upright edges 32 and 33 will nevertheless be able to provide in an advantageous manner conveyance of the crop.

The carrier members 15 are preferably punched from one single piece of metal, the edges 32 and 33 being formed as upwardly flanging projections of the disc.

As is shown more particularly in the Figures 1 and 2, the paths described by the knives 19 and 20 of the adjacent mowing structures overlap each other. Therefore, the carrier members are provided in the region of the mowing members with upwardly directed, flanged projections 41 and 42. Thus, the mowing members can move beneath the adjacent mowing structures when passing the place where the mowing structures face each other and are located closely adjacently to each other. By punching the carrier members 15 as one whole they are cheap in production. Because of the fact that the carrier members in the form of a disc are hardened and because of their thickness 54 of approximately 3 mm, these carrier members 15 are highly resistant to wear, for example they are highly resistant to damage caused by hitting on larger or smaller-sized obstacles, such as stones in the field. The mowing structures are easy to produce, since the mowing members together with the supporting members 21 can be bolted to the carrier members 15 by means of the bolts 22 and 29; so no members need to be welded to the carrier members 15. Connecting the mowing structures to the carrier shaft 48 via the pressure member 50 and the nut 44 is also easy to realize. The nut 44 is fitted to the pin 51 by means of locking means, so that loosening of the nut 44 is hardly possible. The mowing structure 5 provided at the end of the row of mowing structures is provided with a cover member in the form of a conveyor member, which more specifically has for its object to keep the mown crop clear from the adjacent crop to be mown in the subsequent run. The conveyor member 56 can be easily fastened to the mowing structures by means of the bolts 29, so that no special fastening means for the conveyor member 56 are required. Especially when a hardened metal carrier is used, it is useful to arrange a retaining strip 30 of a softer material under the spring ring 31 and the nut 24, so that the spring ring and the nut adequately grip the strip to prevent loosening. In this situation it is advantageous that only one retaining strip 30 is present which, because of its position around the bolt 22 and the bolt 29, is locked from movement relative to the carrier.

Although in the embodiment shown in the Figures 1 and 2 the carrier members 15 are shown to be of an oval shape, it is alternatively possible to use the construction shown for the mowing structures 2 to 5 with round carrier members, as shown in the Figures 6 and 7. Figures 6 and 7 illustrate only the differently constructed carrier member 66 of the mowing structures. The carrier member 66 of Figures 6 and 7 is provided in a similar way as the carrier member 15 in the preceding embodiment with upwardly directed, flanged edges positioned around the fastening members for the mowing members, so that all this is not shown in greater detail here. The central section and the centre portion of the mowing structure are also identical to the mowing structure 5. Therefore, identical shapes have been given the same reference numerals as in the preceding embodiment. The round shape of the carrier member 66 with respect to the oval disc 15 is obtained, since in the region of the flanged portions 41 and 42 which, compared to the carrier member 15 are directed upwardly, the carrier member 66 is of a greater width. The carrier member 66 has upwardly directed, flanged portions 67 and 68 which near the periphery of the central section 16 are equal to the shape of the flanged projections 41 and 42. The flanged projections 67 and 68 have an increasing width towards the periphery because the folding lines 69 converge outwardly in a direction away from the centre line 70 of the disc, the arrangement being as shown more specifically in Figure 6. The carrier members 66, as are also the carrier members 15, are punched from one single, hardened metal plate and have a thickness equal to the thickness 54 of the carrier member 15. In principle the carriers 15 and 66 can be pressed by means of the same dies, as the oval carriers are identical to the carriers 66, but, in the regions of the flanged portions 41 and 42, are shortened so as to provide carriers which are oval compared to the round carriers 66.

Figure 8 is a vertical cross-sectional view through part of a mowing structure 72 which is in substance identical to the mowing structures 2, 3 and 4. Corresponding components are given the same reference numerals and will not be described in greater detail. At the mowing structure 72 the respective carrier members 15 and 66 are connected to the bolt 51 by means of a pressure member 73, which pressure member is of a slightly different shape from that of the pressure member 50. The pressure member 73 has a slightly conical outer periphery 74. This conical portion 74 of the pressure member 73 is more effective when the mowing structure is not provided at its upper side with a cover member, for example the conveyor member 56. The pressure members 73 are therefore preferably used for the mowing structures 2, 3 and 4. The conical outer periphery is the cause that crop will not adhere so easily to the pressure member 73. The crop moving across the mowing structures and conveyed thereby will consequently move more easily along the conical outer periphery 74. The pressure member 73 can, in a similar way as the pressure member 50, press the centre portion 45 against the supporting edge 49. In the embodiment of Figure 8, an O-ring 75 is additionally arranged between the lower edge of the pressure member 73 and the supporting edge 49. This O-ring is slightly resilient, so that the carrier member 15 is capable of some movement between the pressure member 73 and the edge 49. Because of this spring motion of the carrier relative to the carrier shaft 48, shocks which are produced when the mowing structure hits on hard objects, such as stones, can be absorbed. Thus damage to the arrangement will be prevented. Because of the presence of the O-ring 75, there is also obtained a good settlement between the pressure member 73 and the nut 44.

If so desired, for example to prevent crop from sticking to the bolt 51 and the nut 44 and/or to provide an appropriate improved guiding of the crop and/or to prevent wear of the nut 44 and the bolt 51, the central intermediate section of the mowing structures not located at the end of the row, such as the mowing structure 5, may be provided with a lower conical cover cap 76, as is shown in Figure 8. This cover cap 76 is round and has an outer periphery which is about equal to the largest diameter of the conical central section 16. At its outer periphery the cover member 76 has projecting lugs 77, so that the cover member 76 can be bolted to the respective carrier members 15 and 66 by means of the bolts 29. The mowing structure 72 can be used in a similar manner as the mowing structures 2 to 5 with a mowing arrangement as shown in Figure 1. The outermost mowing structure of a row of mowing structures can, as can also the mowing structure 5, be provided with a higher cover member or conveyor member 56, respectively. To that end, for the outermost mowing structure of the row of mowing structures the pressure member for connecting the carrier to the carrier shaft may be of a construction identical to that of the pressure member 50 with a supporting edge 49 for supporting the disc 58.

Figure 9 shows a vertical cross-sectional view through an embodiment of part of a mowing structure 79, which basically may be identical again to the mowing structures 2 to 5, having an oval carrier 15 or a round carrier 66, respectively. In this embodiment the pressure member 80 for connection of the central section of the carrier is of a different construction than in the preceding embodiments.

Basically, the pressure member 80 corresponds to the pressure member 73 but it is of a higher construction, more specifically such that the nut 44 and the bolt 51 are surrounded almost completely by the upwardly extending portions of the presssure member whose outer periphery 81, as is also the outer periphery of the pressure member 73, is of a conical shape. In this embodiment the hollow space 82 at the lower side of the pressure member 80 includes a Belleville washer 83 which urges the central section 45 of the carrier member 15 and the carrier member 66, respectively, against the lower supporting edge 49. Also in this embodiment the carrier member 15 is consequently capable of slight movement relative to the carrier shaft 48, whereas the pressure member 80 is pressed against the lower side of the nut 44 to obtain a good position between the member 80 and the nut 44. The higher pressure member 80 has as its advantage that the nut 54 and the bolt 51 are less vulnerable to wear by crop moving thereacross. In addition, the higher pressure member 80 will guide the crop such that there is less risk of crop sticking to the bolt 51 or the nut 44.

A pressure member as shown in Figure 3 can bear in the same way as the pressure members shown in the Figures 8 and 9 against the central section 45 of the carrier member via a spring member, such as an O-ring or a Belleville washer, in order to render possible a small degree of mobility of the mowing structure relative to the carrier shaft 48. If so desired, it is alternatively possible to provide, for example, only those mowing structures which do not have a high cover member 56, such as the mowing structures 2, 3 and 4 with a spring member, such as the O-ring 75 or the Belleville washer 83, whilst the outermost mowing structure of the row can be connected to the carrier shaft without a spring member.

## Claims

1. An arrangement for mowing standing crops, comprising at least one mowing structure (2 to 5) which is rotatable around an upwardly extending axis of rotation (11), which structure includes a disc-shaped carrier (15) near whose periphery at least one mowing member (19, 20) is provided by means of a fastening member (22) extending through the carrier and a supporting member, which is fastened to the bottom side of the carrier and to which the mowing member (19, 20) is fitted capable of rotation, the fastening member including a bolt head or nut situated at the upper side of the carrier (15), and in the region of which the carrier (15) is provided with flanged edges (32, 33) which extend around at least part of the bolt head or nut (22), a further fastening member (29) with a bolt head or nut above the carrier fastening the supporting member (21) to the bottom side of the carrier, characterized in that a retaining strip (30) is mounted to and resting against the upper side of the carrier, the fastening member (22) and the further fastening member (29) extend through apertures in the retaining strip (30) and the bolt heads or nuts being provided above the retaining strip so as to lock the retaining strip from movement relative to the carrier (15) and around the fastening member (22) and the further fastening member (29), said carrier being made of hardened material and said retaining strip being made of a material softer than that of the hardened carrier (15).

2. An arrangement as claimed in claim 1, characterized in that the carrier (15) is of a thickness more than 2 mm, but less than 4 mm.

3. An arrangement as claimed in claim 1 or 2, characterized in that at least one flanged edge (32, 33) is extending along the retaining strip (30).

4. An arrangement as claimed in any one of the preceding claims, characterized in that at least one of the fastening members (22, 29) is provided with a nut (24) or with a self locking nut or a bolt head and a locking ring above the retaining strip (30).

5. An arrangement as claimed in any one of the preceding claims, characterized in that at least one of the flanged edges (32, 33) is contiguous to a conical centre portion of the carrier (15).

6. An arrangement as claimed in any one of the preceding claims, characterized in that the flanged edges (32, 33) extend predominantly into a radial direction relative to the rotary axis (11) and a flanged edge is provided on both sides of the fastening members (22, 29) and the retaining strip (30).

7. An arrangement as claimed in any one of the preceding claims, characterized in that the carrier (15) is provided with an upwardly directed flanged portion (41) which, relative to the flanged edges (32, 33), is rotated around the rotary shaft.

8. An arrangement as claimed in any one of the preceding claims, characterized in that the carrier is connected to a supporting shaft (48) forming the axis of rotation (11) by means of a pressure member (50, 73, 80), whereby a spring member (75) is provided at the bottom side of the pressure member.

## Patentansprüche

1. Gerät zum Mähen von stehendem Erntegut, mit mindestens einem Mähkörper (2 bis 5), der um eine aufwärts gerichtete Drehachse (11) drehbar ist und einen scheibenförmigen Träger (15) aufweist, nahe dessen Peripherie mindestens ein Mähelement (19, 20) mittels eines Befestigungsgliedes (22) angebracht ist, das sich durch den Träger und ein Stützglied hindurch erstreckt, welches an der Unterseite des Trägers angebracht und mit dem das Mähelement (19, 20) drehbar verbunden ist, wobei das Befestigungsglied einen an der Oberseite des Trägers (15) angeordneten Schraubenkopf oder eine Mutter aufweist, in deren Bereich der Träger (15) mit gebördelten Kanten (32, 33) versehen ist, die den Schraubenkopf oder die Mutter (22) zumindest teilweise umgeben, und wobei ein weiteres Befestigungsglied (29) mit einem über dem Träger angeordneten Schraubenkopf oder einer Mutter das Stützglied (21) mit der Unterseite des Trägers verbindet,
dadurch gekennzeichnet, daß ein Haltesteg (30) an der Oberseite des Trägers angebracht ist und auf ihr aufliegt, wobei das Befestigungsglied (22) und das weitere Befestigungsglied (29) durch Öffnungen in dem Haltesteg (30) hindurchgeführt und die Schraubenköpfe oder Muttern über dem Haltesteg angeordnet sind, um eine Bewegung des Haltesteges relativ zu dem Träger (15) und dem Befestigungsglied (22) sowie dem weiteren Befestigungsglied (29) zu verhindern, und wobei der Träger aus einem gehärteten Material hergestellt ist und der Haltesteg aus einem Material, das weicher ist als das Material des gehärteten Trägers (15).

2. Gerät nach Anspruch 1,
dadurch gekennzeichnet, daß die Dicke des Trägers (15) mehr als 2 mm, jedoch weniger als 4 mm beträgt.

3. Gerät nach Anspruch 1 oder 2,
dadurch gekennzeichnet, daß sich mindestens eine gebördelte Kante (32, 33) entlang des Haltesteges (30) erstreckt.

4. Gerät nach einem der vorhergehenden Ansprüche,
dadurch gekennzeichnet, daß mindestens eines der Befestigungsglieder (22, 29) mit einer Mutter (24) oder einer selbstsichernden Mutter oder einem Schraubenkopf und einem Klemmring versehen ist, die über dem Haltesteg (30) angeordnet sind.

5. Gerät nach einem der vorhergehenden Ansprüche,
dadurch gekennzeichnet, daß mindestens eine der gebördelten Kanten (32, 33) an einem konischen Mittelteil des Trägers (15) anliegt.

6. Gerät nach einem der vorhergehenden Ansprüche,
dadurch gekennzeichnet, daß sich die gebördelten Kanten (32, 33) relativ zu der Drehachse (11) überwiegend in radialer Richtung erstrecken, und daß eine gebördelte Kante beiderseits der Befestigungsglieder (22, 29) und des Haltesteges (30) angeordnet ist.

7. Gerät nach einem der vorhergehenden Ansprüche,
dadurch gekennzeichnet, daß der Träger (15) mit einem nach oben gebogenen Flansch (41) versehen ist, der relativ zu den gebördelten Kanten (32, 33) um die Drehachse versetzt ist.

8. Gerät nach einem der vorhergehenden Ansprüche,
dadurch gekennzeichnet, daß der Träger mittels eines Druckstückes (50, 73, 80) mit einer die Drehachse (11) bildenden Stutzwelle (48) verbunden ist, wobei an der Unterseite des Druckstückes eine Feder (75) angeordnet ist.

## Revendications

1. Dispositif pour faucher des récoltes sur pied, comprenant au moins une structure de fauchage (2 à 5) qui est rotative autour d'un axe de rotation (11) laquelle structure comporte un élément porteur (15) en forme de disque, près de la périphérie duquel au moins un organe faucheur (19, 20) est prévu au moyen d'un organe de fixation (22) traversant l'élément porteur, et un organe de support qui est fixé à la face inférieure de l'élément porteur et sur lequel l'organe faucheur (19, 20) est monté en étant capable de tourner, l'organe de fixation comportant une tête de boulon ou un écrou situé sur la face supérieure de l'élément porteur (15), et dans la région duquel l'élément porteur (15) est muni de bords rabattus (32, 33) qui s'étendent autour d'au moins une partie de la tête de boulon ou écrou (22), un autre organe de fixation (29) avec une tête de boulon ou écrou au dessus de l'élément porteur fixant l'organe de support (21) à la face inférieure de l'élément porteur,
**caractérisé** en ce qu'une bande de retenue (30) est montée sur la face supérieure de l'élément porteur en reposant contre celle-ci, l'organe de fixation (22) et l'autre organe de fixation (29) s'étendant en traversant des ouvertures dans la bande de retenue (30) et les têtes de boulons ou les écrous étant prévus au dessus de la bande de retenue de manière à bloquer la bande de retenue en l'empêchant de se déplacer par rapport à l'élément porteur (15) et autour de l'organe de fixation (22) et de l'autre organe de fixation (29), ledit élément porteur étant fait d'un matériau durci et ladite bande de retenue étant faite d'un matériau moins dur que celui de l'élément porteur durci (15).

2. Dispositif selon la revendication 1, caractérisé en ce que l'élément porteur (15) a une épaisseur supérieure à 2 mm mais inférieure à 4 mm.

3. Dispositif selon la revendication 1 ou 2, caractérisé en ce qu'au moins un bord rabattu (32, 33) s'étend le long de la bande de retenue (30).

4. Dispositif selon l'une quelconque des revendications précédentes, caractérisé en ce qu'au moins un des organes de fixation (22, 29) est muni d'un écrou (24) ou d'un écrou indésserrable ou d'une tête de boulon et d'une bague de verrouillage au dessus de la bande de retenue (30).

5. Dispositif selon l'une quelconque des revendications précédentes, caractérisé en ce qu'au moins un des bords rabattus (32, 33) est contigu à un partie centrale conique de l'élément porteur (15).

6. Dispositif selon l'une quelconque des revendications précédentes, caractérisé en ce que les bords rabattus (32,33) s'étendent principalement dans une direction radiale par rapport à l'axe de rotation (11) et un bord rabattu est prévu de chaque côté des organes de fixation (22, 29) et de la bande de retenue (30).

7. Dispositif selon l'une quelconque des revendications précédentes, caractérisé en ce que l'élément porteur (15) est muni d'une partie à rebord (41) qui est entraînée en rotation par rapport aux bords rabattus (32, 33) en tournant autour de l'arbre de rotation.

8. Dispositif selon l'une quelconque des revendications précédentes, caractérisé en ce que l'élément porteur est relié à un arbre de support (48) formant l'axe de rotation (11) au moyen d'un organe de pression (50, 73, 80), un organe à ressort (75) étant prévu au côté inférieur de l'organe de pression.
